(19) Europäisches Patentamt
European Patent Office
Office européen des brevets

(11) **EP 2 105 708 B1**

(12) **EUROPEAN PATENT SPECIFICATION**

(45) Date of publication and mention
of the grant of the patent:
**04.12.2013 Bulletin 2013/49**

(51) Int Cl.:
***G01C 21/32*** *(2006.01)* ***G06F 17/30*** *(2006.01)*
***B60W 40/06*** *(2012.01)*

(21) Application number: **09004261.5**

(22) Date of filing: **25.03.2009**

(54) **Road shape estimating device, road shape estimating method and program**

Straßenformeinschätzungsvorrichtung, Straßenformeinschätzungsverfahren und Programm

Dispositif d'évaluation de la forme des routes, procédé et programme d'évaluation de la forme des routes

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **28.03.2008 JP 2008087892
28.03.2008 JP 2008087902**

(43) Date of publication of application:
**30.09.2009 Bulletin 2009/40**

(73) Proprietor: **Aisin AW Co., Ltd.
Fujii-cho
Anjo-shi,
Aichi 444-1192 (JP)**

(72) Inventors:
• **Fukumoto, Masataka
Okazaki-shi, Aichi 444-8564 (JP)**
• **Sugiura, Hiroaki
Okazaki-shi, Aichi 444-8564 (JP)**
• **Toujyou, Takayuki
Okazaki-shi, Aichi 444-8564 (JP)**

(74) Representative: **Kramer - Barske - Schmidtchen
Landsberger Strasse 300
80687 München (DE)**

(56) References cited:
EP-A1- 0 789 225        EP-A2- 1 086 844
EP-A2- 1 559 994        EP-A2- 1 593 936
DE-A1-102004 006 687    JP-A- 2001 101 597
JP-A- 2005 315 695      US-B1- 6 304 818

**Description**

The present invention relates to a road shape estimating device, a road shape estimating method and a program.

Conventionally in a navigation device, the actual position, namely, the current position of a vehicle is detected for example using a global positioning system (GPS), map data are read from a data recording unit, a map screen is displayed on a display unit showing a map or the like of a vehicle position representing the current position and a surrounding area of the vehicle position is displayed in the map screen. Therefore, a driver can drive the vehicle according to the vehicle position and the like displayed in the map screen.

Further, when the driver inputs a destination and sets a search condition, route search processing is performed based on the search condition, and a route from the place of departure represented by the current position to the destination is searched for based on the map data. Then a route that has been searched, namely, a searched route is displayed together with the vehicle position in the map screen, and guidance on the searched route, namely, route guidance is performed. Therefore, the driver can drive the vehicle along the displayed searched route.

The vehicle may include a vehicle control system that changes a shift speed of the automatic transmission or changes an output of the engine using information obtained by the navigation device, so as to control traveling of the vehicle.

A road shape estimating device is provided in the vehicle control system, and a road shape is estimated with the road shape estimating device. The road shape estimating device reads road data from a database provided in the data recording unit of the navigation device so as to obtain interpolation point data regarding interpolation points set for representing a road shape by a plurality of points on the database, namely, shape interpolation points. The road shape estimating device calculates the radius of curvature (hereinafter, simply referred to as "radius") of the road between shape interpolation points by means of a three-point calculation method, detects and sets a corner on the database based on each radius, and sets a candidate start point representing a start point of the corner and sets a candidate end point representing an end point of the corner. Further, the road shape estimating device corrects the positions of the candidate start point and the candidate end point based on a clothoid curve expressed by an approximate expression of the corner, estimates the road shape, and records the corrected positions of the candidate start point and the candidate end point as data representing the road shape in the recording unit (refer to, for example, JP2005-214839A).

Another apparatus for predicting road shape and method of calculating a clothoid curve is known from EP 1 559 994 A2.

In the conventional road shape estimating device, however, depending on a way of setting shape interpolation points on the database, it is possible that corners that should be regarded as a plurality of corners on the actual road are detected as one corner.

Consequently, the road shape cannot be estimated precisely.

It is an object of the present invention to solve the problem of the conventional road shape estimating device, and to provide a road shape estimating device, a road shape estimating method and a program which are capable of estimating a road shape more precisely.

The object is achieved by a road shape estimating device according to claim 1 or a method according to claim 5 or a program according to claim 9.

Further developments of the invention are given in the dependent claims.

Further features and advantages follow from a description of a specific embodiment of the present invention with reference to the drawings, which show:

FIG. 1 is a block diagram of a vehicle control system in an embodiment of the present invention;
FIG. 2 is a main flowchart showing an operation of a road shape estimation processing unit in the embodiment of the present invention;
FIG. 3 is a flowchart showing a subroutine of radius calculation processing in the embodiment of the present invention;
FIG. 4 is a diagram explaining the principle of calculating a radius in the embodiment of the present invention;
FIG. 5 is a first explanatory diagram of corner detection processing in the embodiment of the present invention;
FIG. 6 is a second explanatory diagram of the corner detection processing in the embodiment of the present invention;
FIG. 7 is a third explanatory diagram of the corner detection processing in the embodiment of the present invention;
FIG. 8 is a fourth explanatory diagram of the corner detection processing in the embodiment of the present invention;
FIG. 9 is a fifth explanatory diagram of the corner detection processing in the embodiment of the present invention;
FIG. 10 is a sixth explanatory diagram of the corner detection processing in the embodiment of the present invention;
FIG. 11 is a seventh explanatory diagram of the corner detection processing in the embodiment of the present invention;
FIG. 12 is an eighth explanatory diagram of the corner detection processing in the embodiment of the present invention;
FIG. 13 is a ninth explanatory diagram of the corner detection processing in the embodiment of the present invention;

FIG. 14 is a flowchart showing a subroutine of first corner dividing processing in the embodiment of the present invention;

FIG. 15 is a first explanatory diagram of the first corner dividing processing in the embodiment of the present invention;

FIG. 16 is a second explanatory diagram of the first corner dividing processing in the embodiment of the present invention;

FIG. 17 is a third explanatory diagram of the first corner dividing processing in the embodiment of the present invention;

FIG. 18 is a fourth explanatory diagram of the first corner dividing processing in the embodiment of the present invention;

FIG. 19 is a tenth explanatory diagram of the corner detection processing in the embodiment of the present invention;

FIG. 20 is a flowchart showing a subroutine of second corner dividing processing in the embodiment of the present invention;

FIG. 21 is a first explanatory diagram of the second corner dividing processing in the embodiment of the present invention;

FIG. 22 is a second explanatory diagram of the second corner dividing processing in the embodiment of the present invention;

FIG. 23 is a third explanatory diagram of the second corner dividing processing in the embodiment of the present invention

FIG. 24 is a table showing a clothoid coefficient map in the embodiment of the present invention;

FIG. 25 is a flowchart showing a subroutine of clothoid curve calculation processing in the embodiment of the present invention; and

FIG. 26 is an explanatory diagram of fitting processing in the embodiment of the present invention.

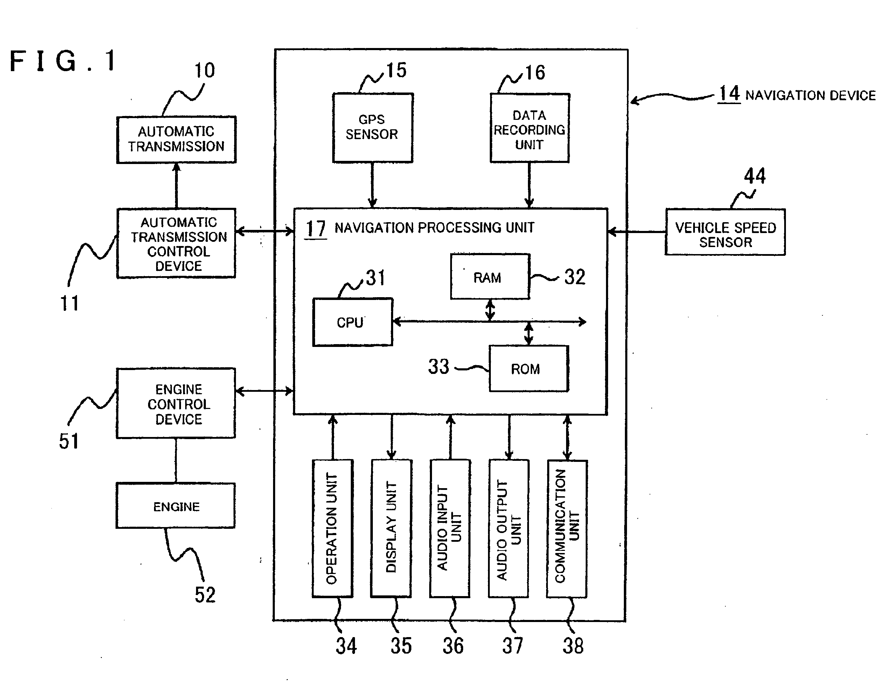

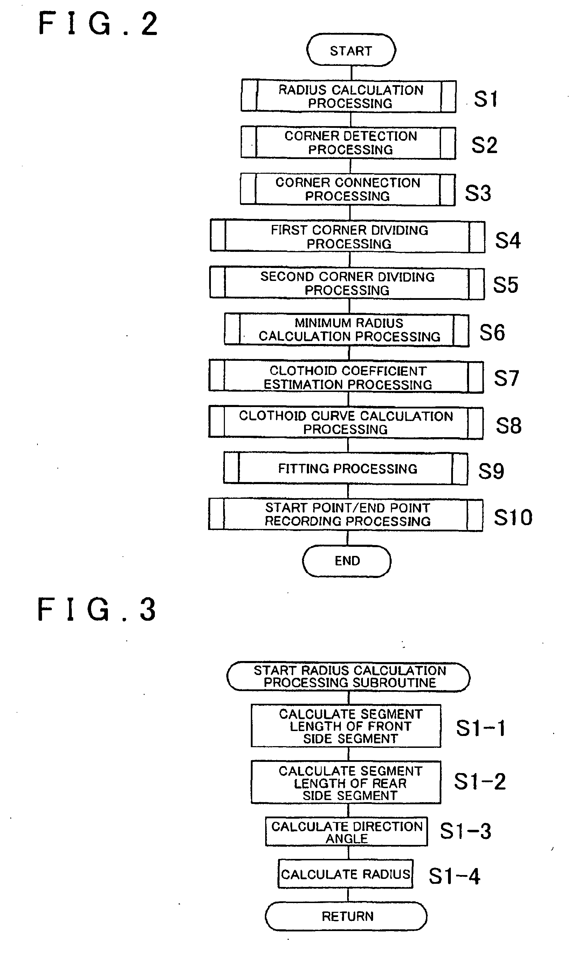

FIG. 1 is a block diagram of a vehicle control system in the embodiment of the present invention, and FIG. 2 is a main flowchart showing an operation of a road shape estimation processing unit in the embodiment of the present invention.

In the diagram, numeral 14 denotes an information terminal, for example, a navigation device as an on-vehicle device mounted in a vehicle, and the navigation device 14 includes a GPS sensor 15 as a current position detecting unit which detects the current position of the vehicle as a vehicle position and the direction of the vehicle as a vehicle direction, a data recording unit 16 as an information recording unit in which various information besides map data (not shown) are recorded, a navigation processing unit 17 performing various calculation processings such as navigation processing, an operation unit 34 as a first input unit with which a driver who is an operator performs a predetermined input by operating it, a display unit 35 as a first output unit for performing various types of display with images displayed on a screen (not shown) for informing the driver, an audio input unit 36 as a second input portion with which the driver performs a predetermined input by voice, an audio output unit 37 as a second output unit for performing audio output to inform the driver of various information, and a communication unit 38 as a transmission/reception unit functioning as a communication terminal. The GPS sensor 15, data recording unit 16, operation unit 34, display unit 35, audio input unit 36, audio output unit 37 and communication unit 38 are connected to the navigation processing unit 17. Further, a vehicle speed sensor 44 or the like as a vehicle speed detecting unit which detects a vehicle speed is connected to the navigation processing unit 17. The GPS sensor 15 detects time besides the vehicle position and the vehicle direction. Note that it is also possible to provide a direction sensor (not shown) independently from the GPS sensor 15 for detecting the vehicle direction with the direction sensor.

In the data recording unit 16, a database constituted of a map data file is provided, and map data are recorded in the database. The map data include road data regarding roads connecting intersections (including branch points), node data regarding nodes representing end points (start points and end points) of the roads, intersection data regarding the intersections, search data processed for searching, facility data regarding facilities, and the like, as well as feature data regarding features on the road. Further, the road data include data representing road links from start points to end points of the roads on the database, and data of shape interpolation points (hereinafter referred to as "interpolation point data") as a plurality of set points which are set along roads for representing road shapes on the road links. The interpolation point data include the numbers, coordinates, and the like of the shape interpolation points. Note that each node represents a start point or end point on a road link, and hence is also a shape interpolation point.

Furthermore, in the data recording unit 16, a database constituted of a statistical data file, a database constituted of a traveling history data file, and the like are provided. Statistical data are recorded in the statistical data file, and traveling history data are recorded in the traveling history data file, both as actual data.

The data recording unit 16 includes a disk (not shown) such as a hard disk, CD, DVD or optical disk for recording the various aforementioned data, and further includes a head (not shown) such as a reading/writing head for reading or writing various data. Further, a memory card or the like can be used for the data recording unit 16.

The navigation processing unit 17 has a CPU 31 as a control device performing overall control of the navigation device 14 and as an arithmetic unit, a RAM 32 used as a working memory when the CPU 31 performs various arithmetic processing, a ROM 33 in which various programs for performing a search of route to a destination, route guidance, and the like are recorded besides a control program, a flash memory (not shown) used for recording various data and programs, and the like.

As the operation unit 34, a keyboard (not shown), mouse, and/or the like provided independently from the display unit 35 can be used. Further, as the operation unit 34, it is possible to use a touch panel which allows to perform a predetermined input operation by touching or clicking image operation units such as various keys, switches, buttons, and the like which are displayed by images on a screen formed on the display unit 35.

A display is used as the display unit 35, which allows to display, on/in various screens displayed on the display unit 35, the vehicle position, vehicle direction and the like, as well as a map, a searched route, guidance information along the searched route, traffic information, and so on, and to display the distance to the next intersection on the searched route and a traveling direction on the next intersection.

Further, the audio input unit 36 comprises a microphone (not shown) or the like, and is adapted to allow input of necessary information by voice. Furthermore, the audio output unit 37 comprises an audio synthesis device (not shown) and a speaker (not shown), and performs route guidance of the searched route by audio output.

The communication unit 38 comprises a beacon receiver (not shown) for receiving various information such as current traffic information and general information transmitted from a vehicle information and communication system center, a FM receiver (not shown) for receiving the various information as an FM multiplex broadcast via an FM broadcast station, and so on. Further, the communication unit 38 is able to receive data such as map data, statistical data, and traveling history data besides information such as traffic information and general information via a network (not shown) from an information center (not shown).

Note that the navigation processing unit 17, CPU 31, and so on function as a computer independently or in combination of two or more of them, and performs arithmetic processing based on various programs, data, and the like. Further, the data recording unit 16, RAM 32, ROM 33, flash memory, and so on form a storage device and a recording medium. As the arithmetical unit, an MPU or the like can be used instead of the CPU 31.

Note that numeral 10 denotes an automatic transmission, numeral 11 denotes an automatic transmission control device, numeral 51 denotes an engine control unit, and numeral 52 denotes an engine.

Next, a basic operation of the navigation device 14 with the above structure will be explained.

First, the operation unit 34 is operated by the driver and the navigation device 14 is started, a current position reading processing unit (not shown) of the CPU 31 performs current position reading processing so as to read the vehicle position and the vehicle direction detected by the GPS sensor 15. Then a matching processing unit (not shown) of the CPU 31 performs matching processing and identifies the vehicle position by determining on which of the road links the vehicle is located based on the trace of the read vehicle position, and shapes, arrangements, and the like of road links forming roads in the surrounding area of the vehicle position.

Subsequently, a basic information obtaining processing unit (not shown) of the CPU 31 performs basic information obtaining processing to read and obtain the map data from the data recording unit 16. Note that the map data can be obtained from the information center or the like, and in this case, the basic information obtaining processing unit downloads the received map data into the flash memory.

A display processing unit (not shown) of the CPU 31 performs display processing to form various screens on the display unit 35. For example, a map display processing unit of the display processing unit performs map display processing to form a map screen on the display unit 35 so as to display a surrounding map and further display the vehicle position and the vehicle direction on the map screen.

Therefore, the driver can drive the vehicle according to the surrounding map, the vehicle position and the vehicle direction.

Further, when the driver inputs a destination by operating the operation unit 34, a destination setting processing unit (not shown) of the CPU 31 performs destination setting processing to set the destination. Note that a place of departure can be inputted and set as necessary. Further, it is possible to register a predetermined point in advance, and set the registered point as a destination. Subsequently, when the driver inputs a search condition by operating the operation unit 34, a search condition setting processing unit (not shown) of the CPU 31 performs search condition setting processing to set the search condition.

When the destination and the search condition are set in this manner, a route search processing unit (not shown) of the CPU 31 performs route search processing to read the vehicle position, vehicle direction, destination, search condition and the like and also read the search data and the like from the data recording unit 16, search for a route from a place of departure represented by the vehicle position to the destination with the search condition based on the vehicle position, vehicle direction, destination, search data, and the like, and output route data representing a searched route. At this time, in the route search processing, the route having a smallest sum of link costs added respectively to road links is taken as the searched route. Note that the place of departure can also be a predetermined point set by the driver instead of the vehicle position, so as to search for a route from the predetermined point to the destination.

Subsequently, a guidance processing unit (not shown) of the CPU 31 performs guidance processing to perform route guidance. For this purpose, a guidance display processing unit of the guidance processing unit performs guidance display processing to read the route data and display the searched route on the map screen based on the route data.

Note that when it is necessary, for example, to turn the vehicle to the right or left at an intersection that is a subject of route guidance. The intersection is set as a guidance intersection, i.e., as a subject of performing guidance on direction how and where to drive the vehicle. An audio output processing unit of the guidance processing unit performs audio output processing to perform the route guidance by audio output before the vehicle reaches the guidance intersection.

Further, a guidance point enlarged view formation processing unit of the guidance processing unit performs guidance point enlarged view formation processing to form, in a predetermined region of the map screen, an enlarged view of the guidance intersection, namely, an intersection enlarged view as a guidance point enlarged view before the vehicle reaches the guidance intersection, and thereby perform route guidance with the intersection enlarged view. For this purpose, when the vehicle reaches a location that is separated by a set distance before (or on the vehicle position side of) the guidance intersection on the searched route, the intersection enlarged view is displayed. In this case, a surrounding map of the guidance intersection, a searched route, and a landmark of a facility or the like to be a marker at the guidance intersection are displayed on the intersection enlarged view.

Now, in this embodiment, information obtained in the navigation device 14 is transmitted to the automatic transmission control device 11 so as to change the shift speed of the automatic transmission 10 corresponding to the road shape ahead of the vehicle position, or transmitted to the engine control device 51 so as to change the output of the engine 52 corresponding to the road shape ahead of the vehicle position, thereby controlling traveling of the vehicle.

For this purpose, the CPU 31 functions as a road shape estimating device, and a road shape estimation processing unit (not shown) of the CPU 31 performs road shape estimation processing so as to estimate the road shape by a method which will be described later. A traveling control processing unit (not shown) of the CPU 31 performs traveling control processing to transmit a signal for changing the shift speed of the automatic transmission 10 or changing the output of the engine 52 according to the estimated road shape to the automatic transmission control device 11, the engine control device 51, or the like.

Next, an operation of the road shape estimation processing unit will be explained according to FIG. 2.

First, a data obtaining processing unit of the road shape estimation processing unit performs data obtaining processing to set a predetermined region ahead of the vehicle position including the road to be a target of estimating a road shape as a road shape estimation range, reads road data from the data recording unit 16, and obtains node data within the road shape estimation range.

In this case, within the road shape estimation range, estimation of road shape is performed in sequence regarding road links between nodes adjacent to each other from the first node to the last node among the nodes represented by the node data. Note that in this case, each road link for which estimation of a road shape is performed in a road on the database is referred to as a shape estimation road.

Then, for performing estimation of a road shape for each shape estimation road, the data obtaining processing unit obtains interpolation point data of shape interpolation points on the shape estimation road ahead of the vehicle position. Note that in this embodiment, the data obtaining processing unit obtains the node data and the interpolation point data by reading them from the data recording unit 16, but they can be obtained also by receiving via a network from the information center or the like.

Next, a radius calculation processing unit of the road shape estimation processing unit performs radius calculation processing to calculate a radius (radius of curvature) in each shape interpolation point of the shape estimation road by three-point calculation method based on the interpolation point data of shape interpolation points on the shape estimation road ahead of the vehicle position. Subsequently, a corner detection processing unit of the road shape estimation processing unit performs corner detection processing to detect a corner in the shape estimation road on the database based on the radius, and sets a shape interpolation point where the corner starts as a candidate start point, and a shape interpolation point where the corner ends on the database as a candidate end point.

When a corner that should be regarded as one corner on the actual road is detected as a plurality of corners depending on the way of setting the shape interpolation points on the database, a corner connection processing unit of the road shape estimation processing unit then performs corner connection processing so as to connect the detected corners.

Next, when corners that should be regarded as a plurality of corners on the actual road are detected as one corner on the database due to the fact that a shape interpolation point is not set in a straight section between corners or the fact that a shape interpolation point has a radius that is equal to or smaller than a threshold value for corner detection, which will be described later, first and second corner dividing processing units of the road shape estimation processing unit perform first and second corner dividing processing to divide the detected corner. In this case, in the first corner dividing processing, the detected corner is divided when a predetermined shape interpolation point in the corner has a radius that is equal to or larger than a threshold (also referred as a radii threshold) for first dividing condition determination, which will be described later, and in the second corner dividing processing, the detected corner is divided when a segment between predetermined shape interpolation points in the corner has a length that is equal to or longer than a threshold for second dividing condition determination, which will be described later.

In this manner, when connection of corners or dividing of a corner is performed to set an appropriate corner based on shape interpolation points, a minimum radius calculation processing unit of the road shape estimation processing unit performs minimum radius calculation processing to calculate an appropriate minimum radius for estimating a clothoid coefficient for each corner.

Subsequently, a clothoid coefficient estimation processing unit of the road shape estimation processing unit performs clothoid coefficient estimation processing to estimate a clothoid coefficient based on the minimum radius. A clothoid curve calculation processing unit of the road shape estimation processing unit performs clothoid curve calculation processing to form an approximate equation of the corner based on the clothoid coefficient and calculate a clothoid curve.

In this manner, when the clothoid curve representing the road shape of the corner is calculated, a fitting processing unit of the road shape estimation processing unit performs fitting processing to correct the candidate start point and the candidate end point by matching the clothoid curve with the respective shape interpolation points on the corner, and thereby set the start point and the end point of the corner to positions approximating to a point where the corner starts and a point where the corner ends on the actual road.

Then a start point/end point recording processing unit of the road shape estimation processing unit performs start point/end point recording processing to record the start point and the end point as data representing the road shape in the data recording unit 16. In this manner, the road shape is estimated.

Next, the flowchart will be explained.

In step S 1, the radius calculation processing is performed.

In step S2, the corner detection processing is performed.

In step S3, the corner connection processing is performed.

In step S4, the first corner dividing processing is performed.

In step S5, the second corner dividing processing is performed.

In step S6, the minimum radius calculation processing is performed.

In step S7, the clothoid coefficient estimation processing is performed.

In step S8, the clothoid curve calculation processing is performed.

In step S9, the fitting processing is performed.

In step S10, the start point/end point recording processing is performed, and the processing is finished.

Next, the subroutine of the radius calculation processing in step S1of FIG. 2 will be explained.

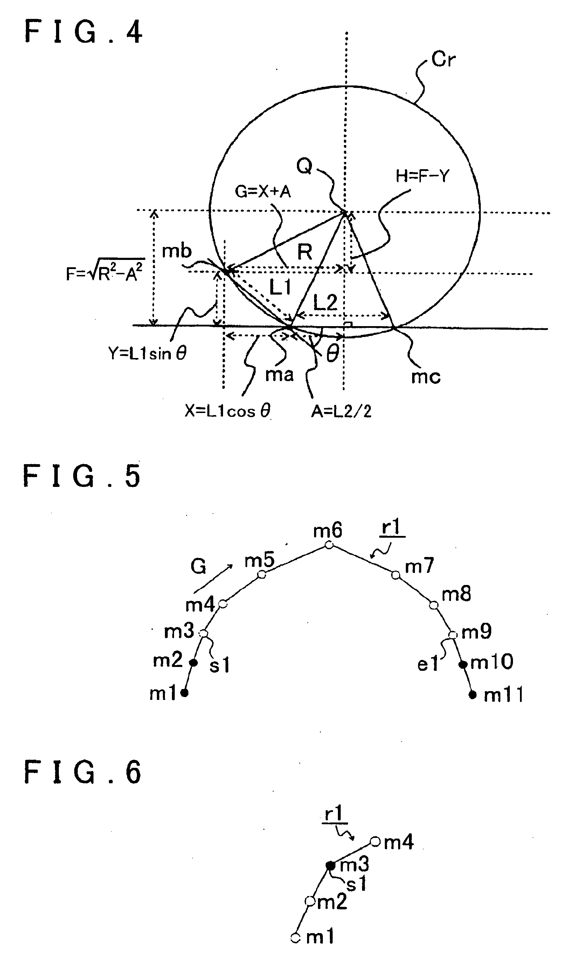

FIG. 3 is a flowchart showing the subroutine of the radius calculation processing in the embodiment of the present invention, and FIG. 4 is a diagram explaining the principle of calculating a radius in the embodiment of the present invention.

As shown in FIG. 4, a shape interpolation point to be a target of radius calculation processing is designated as target point ma, a shape interpolation point that is located immediately preceding the target point ma (on the vehicle position side) is designated as preceding adjacent point mb, and a shape interpolation point that is located immediately succeeding the target point ma (on the side to depart from the vehicle position) is designated as succeeding adjacent point mc. The segment length of a segment on a side nearer than the target point ma (hereinafter referred to as "front side segment") that connects the target point ma and the preceding adjacent point mb is designated as L1, and the segment length of a segment on a side farther than the target point ma (hereinafter referred to as "rear side segment") that connects the target point ma and the succeeding adjacent point mc is designated as L2. Further, when the circle passing through the target point ma, the preceding adjacent point mb and the succeeding adjacent point mc is designated as Cr, the center of the circle Cr is designated as Q and the radius of the circle Cr is designated as R. Furthermore, at the target point ma, the angle which the rear side segment forms with respect to the front side segment is designated as direction angle $\theta$.

A direction to connect the target point ma and the succeeding adjacent point mc is x-axis direction and a direction at a right angle with respect to the x axis direction is y-axis direction, and when the distance between the target point ma and the preceding adjacent point mb in the x-axis direction is designated as X, the distance between the target point ma and the center Q in the x-axis direction is designated as A, the distance between the preceding adjacent point mb and the center Q in the x-axis direction is designated as G, the distance between the target point ma and the preceding adjacent point mb in the y-axis direction is Y, the distance between the preceding adjacent point mb and the center Q in the y-axis direction is designated as H, and the distance between the target point ma and the center Q on the y-axis direction is designated as F, following equations hold true:

$X = L1\cos\theta$

$A = L2/2$

$G = X + A$

$Y = L1 \sin\theta$

$F = \sqrt{(R^2 - A^2)}$

$H = F - Y$

In this case, the sum of the square of the distance G and the square of the distance H is equal to the square of the radius R, and thus the relationship of equation (1) is satisfied.

$R^2 = G^2 + H^2 ... (1)$

Next, by substituting the above respective values into the distances G, H of the equation (1), following equation (2) can be obtained.

$R^2 = X^2 + 2XA + A^2 + R^2 - A^2 - 2Y\sqrt{(R^2 - A^2)} + Y^2 ... (2)$

Subsequently, by modifying the equation (2), equations (3) to (6) can be obtained.

$2Y\sqrt{(R^2 - A^2)} = X^2 + Y^2 + 2XA ... (3)$ $R^2 - A^2 = \{(X^2 + Y^2 + 2XA)/2Y\}^2 ... (4)$ $R^2 = \{(X^2 + Y^2 + 2XA)/2Y\}^2 + A^2 ... (5)$ $R^2 = (L1^2 + 2L1 \cdot L2 \cdot \cos\theta + L2^2)/(2\sin\theta)^2 ... (6)$ From the equation (6), it can be seen that the radius R is a function of the segment lengths L1, L2 and the direction angle $\theta$.

Accordingly, the radius calculation processing unit reads the interpolation point data, calculates the segment lengths L1, L2 based on respective coordinates of the target point ma, the preceding adjacent point mb and the succeeding adjacent point mc, and calculates the direction angle $\theta$.

Subsequently, the radius calculation processing unit calculates the radius R of the circle Cr by aforementioned equation (6) based on the segment lengths L1, L2 and the direction angle $\theta$. In this manner, the radius R at the target point ma can be calculated on the shape estimation road.

Next, the flowchart will be explained.

In step S1-1, the segment length L1 of the front side segment is calculated.

In step S1-2, the segment length L2 of the rear side segment is calculated.

In step S1-3, the direction angle $\theta$ is calculated.

In step S1-4, the radius R is calculated and the process returns to the main routine.

Note that in this embodiment, the direction angle $\theta$ and the radius R are calculated based on calculations by the radius calculation processing unit, but it is also possible to record a direction angle $\theta$ and a radius R which are calculated in advance in the database of the data recording unit 16 as part of the road data, and perform calculation by reading them from the data recording unit 16.

Next, the corner detection processing in step S2 of FIG. 2 will be explained.

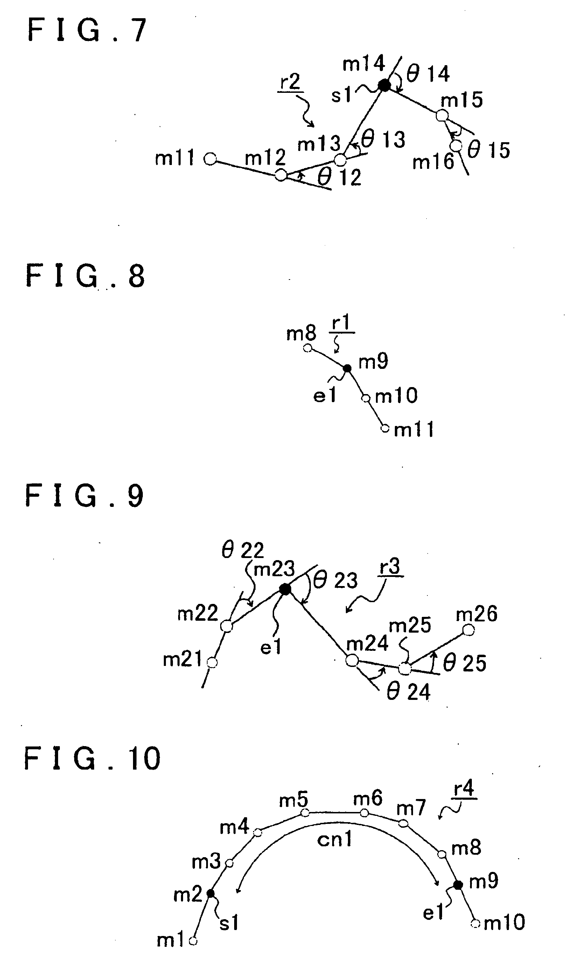

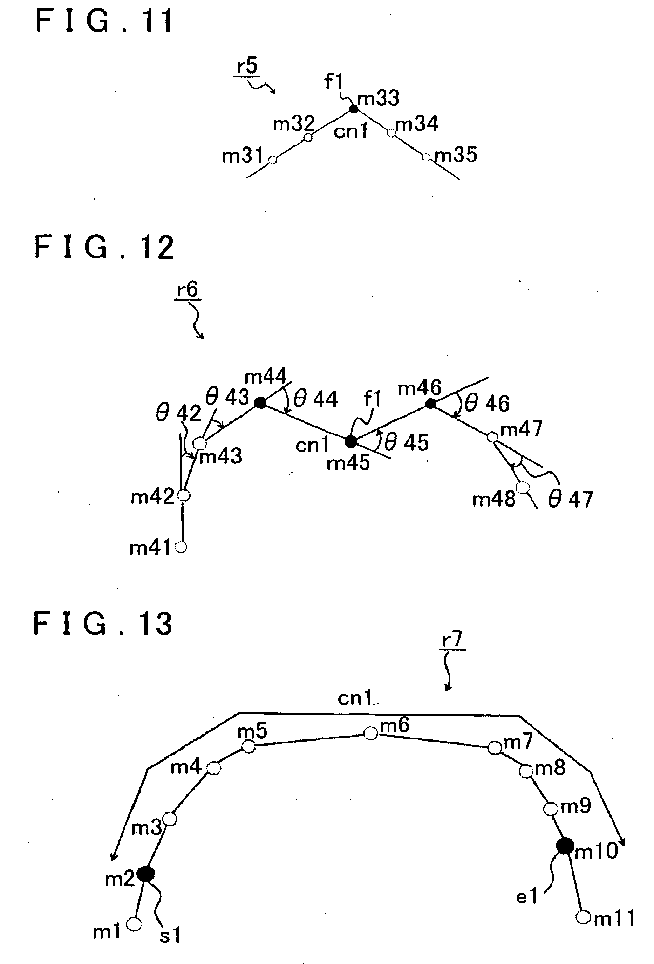

FIG. 5 is a first explanatory diagram of the corner detection processing in the embodiment of the present invention. FIG. 6 is a second explanatory diagram of the corner detection processing in the embodiment of the present invention. FIG. 7 is a third explanatory diagram of the corner detection processing in the embodiment of the present invention. FIG. 8 is a fourth explanatory diagram of the corner detection processing in the embodiment of the present invention. FIG. 9 is a fifth explanatory diagram of the corner detection processing in the embodiment of the present invention. FIG. 10 is a sixth explanatory diagram of the corner detection processing in the embodiment of the present invention. FIG. 11 is a seventh explanatory diagram of the corner detection processing in the embodiment of the present invention. FIG. 12 is an eighth explanatory diagram of the corner detection processing in the embodiment of the present invention. FIG. 13 is a ninth explanatory diagram of the corner detection processing in the embodiment of the present invention.

In the diagrams, ri (i = 1, 2, ...) is a shape estimation road set between two nodes (not shown), mi (i = 1, 2, ...) are a plurality of shape interpolation points set in order from the near side in the traveling direction of the vehicle (arrow G direction) along the shape estimation road ri, and $\theta$i (i = 1, 2, ...) is a direction angle at each shape interpolation point mi. Note that the direction angle $\theta$i is an angle which the rear side segment forms with respect to the front side segment. When the rear side segment is located on the right side in the traveling direction of the vehicle with respect to the front side segment, the direction angle $\theta$i takes a positive value. When the rear side segment is located on the left side in the traveling direction of the vehicle with respect to the front side segment, the direction angle $\theta$i takes a negative value.

First, a candidate start point/candidate end point setting processing unit of the corner detection processing unit performs candidate start point/candidate end point setting processing to read the radius Ri (i = 1, 2, ...) at each shape interpolation point mi, determine whether the radius Ri is equal to or smaller than a threshold Rth (1000 [m] in this embodiment) for corner detection which is set in advance, and extract any shape interpolation point with a radius equal to or smaller than the threshold Rth. In FIG. 5, the shape interpolation points m3 to m9 are close to a straight line, and they are determined to have radii Ri that are equal to or lower than the threshold Rth and extracted.

Subsequently, the candidate start point/candidate end point setting processing unit determines whether or not there are a plurality of consecutive shape interpolation points (hereinafter referred to as a "consecutive shape interpolation point group") among the extracted shape interpolation points. When there is a consecutive shape interpolation point group, the unit takes the shape interpolation point on the nearest side (vehicle position side) in the consecutive shape interpolation point group as a candidate start point. In FIG. 5 and FIG. 6, the consecutive shape interpolation point group is formed by the shape interpolation points m3 to m9, and the shape interpolation point m3 is taken as the candidate start point s1.

Further, the candidate start point/candidate end point setting processing unit reads the direction angles $\theta$ calculated by the radius calculation processing unit for the extracted shape interpolation points sequentially from the near side, and determines whether or not the positiveness or negativeness of the direction angle reverses at a predetermined shape interpolation point (the direction of the direction angle reverses with respect to the immediately preceding shape interpolation point). When the positiveness or negativeness of the direction angle reverses at the predetermined shape interpolation point, the unit determines whether or not the positiveness or negativeness reverses at the immediately succeeding shape interpolation point. Then, when the positiveness or negativeness of the direction angle reverses at the predetermined shape interpolation point and the positiveness or negativeness does not reverse at the immediately succeeding shape interpolation point, the predetermined shape interpolation point is taken as the candidate start point. When shape interpolation points m11 to m16 are set on a shape estimation road r2 having a shape as shown in FIG. 7, direction angles $\theta12$ and $\theta13$ take negative values and direction angles $\theta14$ and $\theta15$ take positive values at the shape interpolation points m12 to m15. That is, the positiveness or negativeness of the direction angle $\theta14$ reverses from negative to positive at the shape interpolation point m14, and the positiveness or negativeness of the direction angle $\theta15$ remains positive and does not reverse at the immediately succeeding shape interpolation point m15. Thus, the shape interpolation point m14 is taken as the candidate start point s1.

Next, the candidate start point/candidate end point setting processing unit determines whether or not there is a consecutive shape interpolation point group among the extracted shape interpolation points. When there is a consecutive shape interpolation point group, the unit takes the shape interpolation point on the farthest side (side to depart from the vehicle position) in the consecutive shape interpolation point group as a candidate end point. In FIG. 5 and FIG. 8, the consecutive shape interpolation point group is formed by the shape interpolation points m3 to m9, and the shape interpolation point m9 is taken as the candidate end point e1.

Further, the candidate start point/candidate end point setting processing unit determines whether the positiveness or negativeness of the direction angle reverses at a predetermined shape interpolation point. When the positiveness or negativeness of the direction angle does not reverse at the predetermined shape interpolation point, the unit determines whether or not the positiveness or negativeness reverses at the immediately succeeding shape interpolation point. Then, when the positiveness or negativeness of the direction angle does not reverse at the predetermined shape interpolation point and the positiveness or negativeness reverses at the immediately succeeding shape interpolation point, the predetermined shape interpolation point is taken as a candidate end point. When shape interpolation points m21 to m26 are set on a shape estimation road r3 having a shape as shown in FIG. 9, direction angles $\theta22$ and $\theta23$ take positive values and direction angles $\theta24$ and $\theta25$ take negative values at the shape interpolation points m22 to m25. That is, the positiveness or negativeness of the direction angle $\theta23$ remains positive and does not reverse at the shape interpolation point m23, and the positiveness or negativeness of the direction angle $\theta24$ reverses from positive to negative at the immediately succeeding shape interpolation point m24. Thus, the shape interpolation point m23 is taken as a candidate end point e1.

In this manner, when the candidate start point and the candidate end point are set, a corner setting processing unit of the corner detection processing unit performs cornner setting processing, and sets a corner between the candidate start point and the candidate end point. On a shape estimation road r4 having a shape as shown in FIG. 10, a shape interpolation point m2 out of shape interpolation points m1 to m10 is taken as the candidate start point s1, the shape interpolation point m9 is taken as the candidate end point e1, and a corner cn1 between the candidate start point s1 and the candidate end point e1 is set.

Note that when the radius of the predetermined shape interpolation point is equal to or smaller than the threshold Rth and both the radius of the immediately preceding shape interpolation point and the radius of the immediately succeeding shape interpolation point are larger than the threshold Rth, the candidate start point/candidate end point setting processing unit sets the predetermined shape interpolation point as a single point combining a candidate start point and a candidate end point, and the corner setting processing unit sets a corner to the predetermined shape interpolation point. On a shape estimation road r5 having a shape as shown in FIG. 11, a shape interpolation point m33 among shape interpolation points m31 to m35 is set to a single point f1, and a corner cn1 is set to the shape interpolation point m33.

Furthermore, when the positiveness or negativeness of the direction angle reverses at the predetermined shape interpolation point and the positiveness or negativeness of the direction angle reverses at the immediately succeeding shape interpolation point, the candidate start point/candidate end point setting processing unit sets the predetermined shape interpolation point as a single point.

On a shape estimation road r6 having a shape as shown in FIG. 12, direction angles $\theta42$ to $\theta44$, $\theta46$ and $\theta47$ at shape interpolation points m42 to m44, m46 and m47 among shape interpolation points m41 to m48 take positive values, and a direction angle $\theta45$ at a shape interpolation point m45 takes a negative value. In this case, the positiveness or negativeness of the direction angle $\theta45$ reverses from positive to negative at the shape interpolation point m45, and the positiveness or negativeness of the direction angle $\theta46$ reverses from negative to positive at the immediately succeeding shape interpolation point m46. Thus, the shape interpolation point m45 is set to a single point f1 and a corner cn1 is set to the shape interpolation point m45.

Subsequently, the corner setting processing unit sets three corners cn1 to cn3 before and after the single point f1 and at the single point f1. Note that, in this case, the numbers of the corners are added sequentially from the near side, and the number of a candidate start point and the number of a candidate end point are added corresponding to the numbers of the corners.

In this manner, when a corner is set on a shape estimation road, the recording processing unit of the corner detection processing unit performs recording processing to record the number of corners in the shape estimation road, the number of a candidate start point, the number of a candidate end point, and so on in the RAM 32 (FIG. 1).

Now, as described above, when precision of the interpolation point data on the database is low and a predetermined shape interpolation point is set deviating from a straight line in a straight section of a corner, it is possible that corners that should be regarded as a plurality of corners on the actual road are detected as one corner on the database by the corner determination processing unit, and a candidate start point and a candidate end point of one corner are set. For example, on a shape estimation road r7 having a shape close to a trapezoid as shown in FIG. 13, a shape interpolation point m6, which should be set normally on a straight line connecting shape interpolation points m5, m7, is set deviating from the straight line connecting the shape interpolation points m5, m7 between the shape interpolation points m5, m7 that is a straight section.

In this case, radii R2 to R10 at shape interpolation points m2 to m10 calculated in the radius calculation processing are equal to or smaller than the threshold Rth and the positiveness or negativeness of direction angles do not reverse at the shape interpolation points m2 to m10. Thus, in the corner detection processing, one corner cn1 is detected in the shape interpolation points m2 to m10.

Accordingly, in this embodiment, when corners that should be regarded as a plurality of corners on the actual road are detected as one corner on the database, dividing of the corner is performed by the first corner dividing processing unit.

Next, the subroutine of the first corner dividing processing in step S4 of FIG. 2 will be explained.

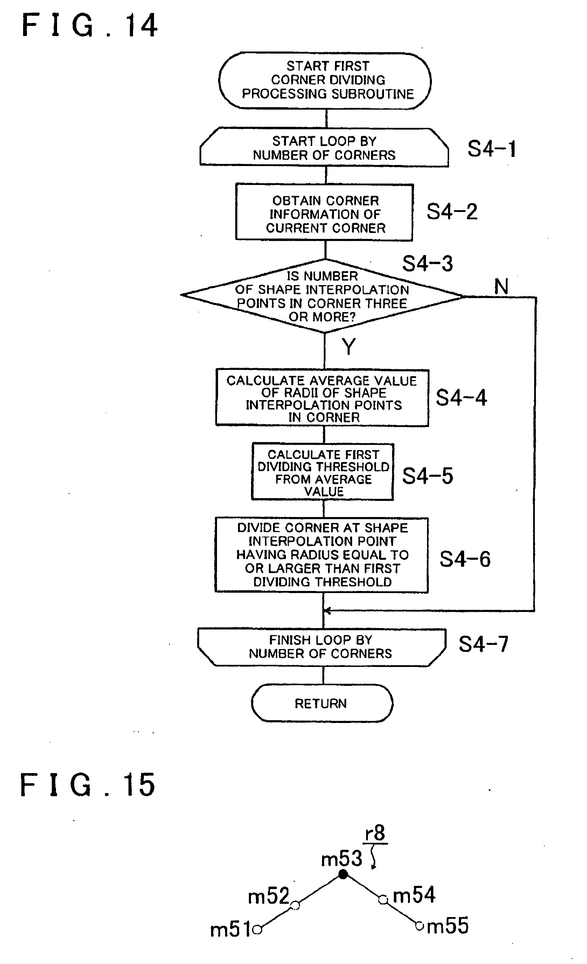

FIG. 14 is a flowchart showing the subroutine of the first corner dividing processing in the embodiment of the present invention. FIG. 15 is a first explanatory diagram of the first corner dividing processing in the embodiment of the present invention.

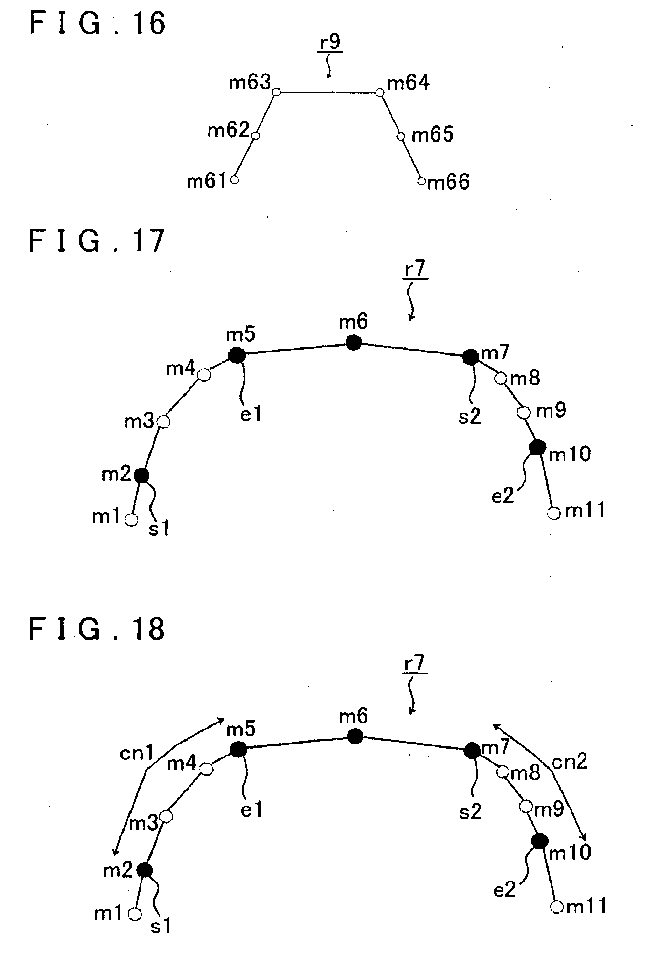

FIG. 16 is a second explanatory diagram of the first corner dividing processing in the embodiment of the present invention. FIG 17 is a third explanatory diagram of the first corner dividing processing in the embodiment of the present invention. FIG. 18 is a fourth explanatory diagram of the first corner dividing processing in the embodiment of the present invention.

First, a corner information obtaining processing unit (radius basis corner information obtaining processing unit) of the first corner dividing processing unit performs corner information obtaining processing to obtain corner information of predetermined corners in a shape estimation road by reading it from the RAM 32. In this case, respective corners existing on the shape estimation road are selected in sequence as predetermined corners.

Note that the corner information includes the numbers of a candidate start point and a candidate end point of each corner recorded in the RAM 32 besides the interpolation point data. In this embodiment, the first corner dividing processing for the shape estimation road r7 of FIG. 13 is performed. Thus, the corner information obtaining processing unit obtains the number of a corner cn1, the number of a candidate start point s1 of the corner cn1, the number of a candidate end point e1 of the corner cn1, the respective numbers of shape interpolation points m2 to m10, radii R2 to R10 at the respective shape interpolation points m2 to m10, and so on.

Subsequently, a dividing condition determination processing unit (radius basis dividing condition determination processing unit) of the first corner dividing processing unit performs dividing condition determination processing to read the numbers of the shape interpolation points, calculate the number of shape interpolation points in a corner, and determine whether or not a first dividing condition for performing a first corner dividing processing is met by whether the number of shape interpolation points is equal to or larger than a threshold, which is three in this embodiment. On the shape estimation road r7 of FIG. 13, the number of shape interpolation points m2 to m10 in the corner cn1 is nine, and thus the first dividing condition is met.

For example, in a shape estimation road r8 of FIG. 15, a shape interpolation point m53 among shape interpolation points m51 to m55 has a radius equal to or smaller than the threshold and a corner is detected. However, the number of shape interpolation point m53 in the corner is one. Since three or more shape interpolation points are not included in the corner, the first dividing condition is not met. Further, on a shape estimation road r9 of FIG. 16, shape interpolation points m63, m64 among shape interpolation points m61 to m66 have radii equal to or smaller than the threshold and a corner is detected, but the number of shape interpolation points m63, m64 in the corner is two. Since three or more shape interpolation points are not included in the corner, the first dividing condition is not met.

Next, the dividing condition determination processing unit determines whether a radius at a predetermined shape interpolation point in the corner is relatively larger as compared to respective radii at other shape interpolation points in the corner. For this purpose, the dividing condition determination processing unit reads radii at respective shape interpolation points in the corner, and determines whether a second dividing condition is met or not by whether the predetermined shape interpolation point in the corner has a radius equal to or larger than a threshold for a first dividing condition determination calculated based on the radii at respective shape interpolation points in the corner, that is, first dividing threshold Rthcn.

For this purpose, an average radius calculation processing unit of the dividing condition determination processing unit performs average radius calculation processing to calculate an average value Ra of radii R2 to R10 at respective shape interpolation points m2 to m10. Subsequently, a threshold calculation processing unit of the dividing condition determination processing unit performs threshold calculation processing to set the first dividing threshold Rthcn, when a standard deviation calculated based on the average value Ra is a1, to be

$$Rthcn = Ra + 3 \cdot \sigma 1$$

On a shape estimation road r7 of FIG. 17, when a shape interpolation point m6 has a radius R6 equal to or larger than the first dividing threshold Rthcn, the second dividing condition is met. Note that the standard deviation σ1 is an added value set corresponding to the average value Ra.

Subsequently, when the first, second dividing conditions are met, a division execution processing unit (radius basis division execution processing unit) of the dividing condition determination processing unit performs division execution processing to divide the corner at a shape interpolation point having a radius equal to or larger than the first dividing threshold Rthcn. Specifically, the division execution processing unit adds the shape interpolation point immediately preceding the shape interpolation point having a radius equal to or larger than the first dividing threshold Rthcn as a candidate end point, and adds the shape interpolation point immediately succeeding the shape interpolation point having a radius equal to or larger than the first dividing threshold Rthcn as a candidate start point. On the shape estimation road r7 of FIG. 17, the corner is divided at a shape interpolation point m6 having a radius equal to or larger than the first dividing threshold Rthcn. A shape interpolation point m2 is taken as a candidate start point s1, and the shape interpolation point m5 immediately preceding a shape interpolation point m6 is taken as a candidate end point e1. Then the shape interpolation point m7 immediately succeeding the shape interpolation point m6 is taken as a candidate start point s2, and a shape interpolation point m 10 is taken as a candidate end point e2.

In this manner, in this embodiment, as shown in FIG. 18, a corner cn1 is set by the shape interpolation points m2 to m5 and a corner cn2 is set by the shape interpolation points m7 to in m10.

Further, when one of the first, second dividing conditions is not met, the corner division execution processing unit does not divide the current corner.

Accordingly, in this embodiment, even if precision of the interpolation point data on the database is low and a predetermined shape interpolation point is set deviating from a straight line in a straight section of a corner, dividing of the corner is performed when the first, second dividing conditions are met. Therefore, corners that should be regarded as a plurality of corners on the actual road will not be regarded as one corner on the database, and thus the road shape can be estimated precisely.

Further, since the first dividing threshold Rthcn is calculated by adding the standard deviation σ1 to the average value Ra, it is set larger as the average value Ra gets larger or set smaller as the average value Ra gets smaller. Thus, even if noise is added to values of the respective radii R2 to R10 or the like, it is possible to precisely determine whether the second dividing condition is met or not.

Since the standard deviation σ1 represents the degree of dispersion of the radii R2 to R10 at the respective shape interpolation points m2 to m10 of the corner, easiness for dividing of the corner to be performed can be changed according to the degree of dispersion of the radii R2 to R10. Specifically, when the degree of dispersion of the radii R2 to R10 is high, the first dividing threshold Rthcn becomes large, which makes it difficult for the second dividing condition to be met, and makes it difficult for dividing of the corner to be performed. On the other hand, when the degree of dispersion of the radii R2 to R10 is low, the first dividing threshold Rthcn becomes small, which makes it easy for the second dividing condition to be met, and makes it easy for dividing of the corner to be performed.

Therefore, diving of the corner can be performed appropriately.

Note that in this embodiment, the first dividing threshold Rthcn is calculated by adding the standard deviation σ1 to the average value Ra, but a first dividing threshold Rthcn that is set in advance corresponding to the average value Ra can be recorded, for example, in the data recording unit 16.

In this case, a radius threshold map as a first threshold map in which the average value Ra and the first dividing threshold Rthcn correspond to each other is recorded in the ROM 33. In the division execution processing, the division execution processing unit refers to the radius threshold map to read the first dividing threshold Rthcn corresponding to the average value Ra, compares each of R2 to R10 with the first dividing threshold Rthcn, and divides the corner at a shape interpolation point having a radius equal to or larger than the first dividing threshold Rthcn.

Next, the flowchart will be explained.

In step S4-1, a loop by the number of corners is started.

In step S4-2, corner information of the current corner is obtained.

In step S4-3, it is determined whether the number of shape interpolation points in the corner is three or more. When the number of shape interpolation points in the corner is three or more, the process proceeds to step S4-4. When the number of shape interpolation points in the corner is smaller than three, the process proceeds to step S4-7.

In step S4-4, the average value of radii of the shape interpolation points in the corner is calculated.

In step S4-5, the first dividing threshold Rthcn is calculated from the average value Ra.

In step S4-6, the corner is divided at a shape interpolation point having a radius equal to or larger than the first dividing threshold Rthcn.

In step S4-7, the loop by the number of corners is finished, and the process is finished.

Now, as described above, when precision of the interpolation point data on the database is low and a shape interpolation point is not set in a straight section of a corner, it is possible that corners that should be regarded as a plurality of corners on the actual road are detected as one corner on the database by the corner detection processing, and a candidate start point and a candidate end point of one corner are determined.

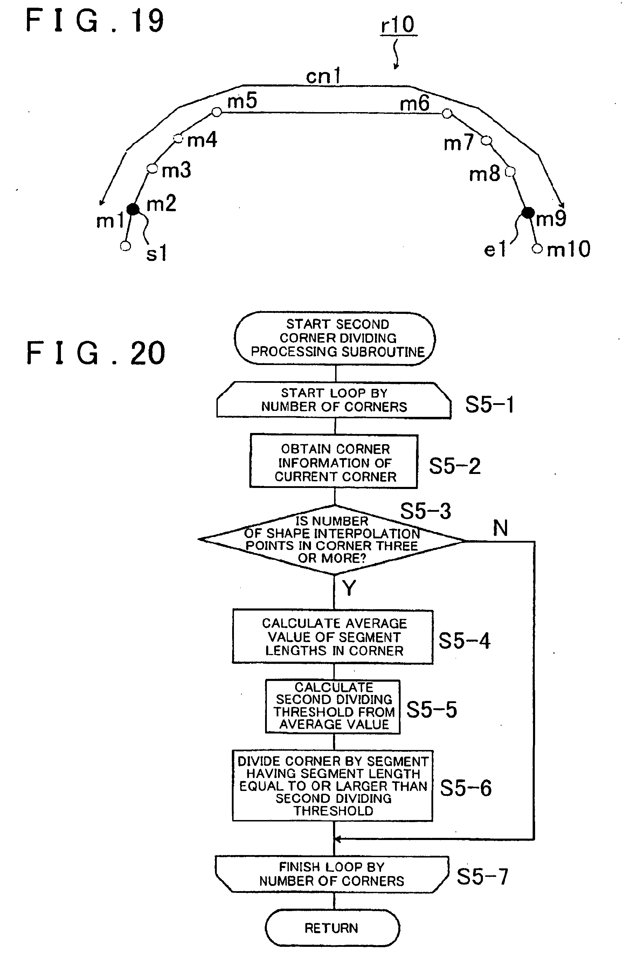

FIG. 19 is a tenth explanatory diagram of the corner detection processing in the embodiment of the present invention.

In this case, on a shape estimation road r10 having a trapezoidal shape as shown in the diagram, a shape interpolation point that should be set is not set in the section between shape interpolation points m5, m6, which is a straight section.

In this case, radii R2 to R9 at shape interpolation points m2 to m9 calculated in the radius calculation processing are equal to or lower than the threshold Rth, and the positiveness or negativeness of direction angles do not reverse at the shape interpolation points m2 to m9. Thus, in the corner detection processing, one corner cn1 is detected for the shape interpolation points m2 to m9.

Accordingly, in this embodiment, dividing of the corner is performed by the second corner dividing processing unit.

Next, the subroutine of the second corner dividing processing in step S5 of FIG. 2 will be explained.

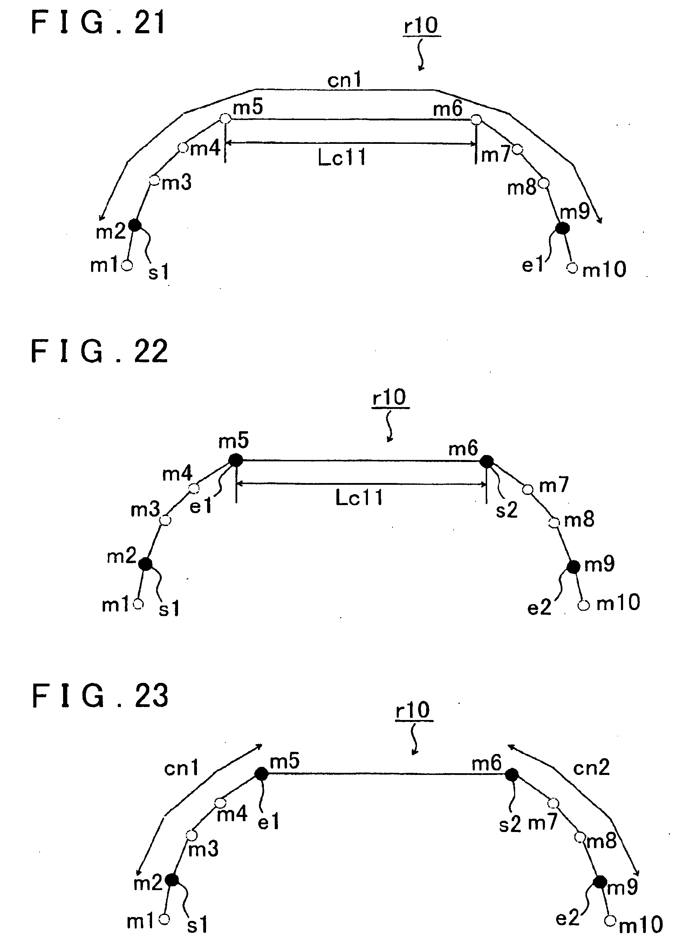

FIG. 20 is a flowchart showing the subroutine of the second corner dividing processing in the embodiment of the present invention. FIG. 21 is a first explanatory diagram of the second corner dividing processing in the embodiment of the present invention. FIG. 22 is a second explanatory diagram of the second corner dividing processing in the embodiment of the present invention. FIG. 23 is a third explanatory diagram of the second corner dividing processing in the embodiment of the present invention.

First, a corner information obtaining processing unit (segment length basis corner information obtaining processing unit) of the second corner dividing processing unit performs corner information obtaining processing to obtain corner information of predetermined corners in a shape estimation road by reading it from the RAM 32. In this case, respective corners existing on the shape estimation road are selected in sequence as predetermined corners.

Note that the corner information includes the numbers of a candidate start point and a candidate end point of each corner recorded in the RAM 32 besides the interpolation point data. In this embodiment, the second corner dividing processing for a shape estimation road r10 is performed. Thus, the corner information obtaining processing unit obtains the number of a corner cn1, the number of a candidate start point s1 of the corner cn1, the number of a candidate end point e1 of the corner cn1, the respective numbers of shape interpolation points m2 to m9, segment lengths of respective segments between the respective shape interpolation points m2 to m9, and so on.

Subsequently, a dividing condition determination processing unit (segment length basis dividing condition determination processing unit) of the second corner dividing processing unit performs dividing condition determination processing to read the numbers of the shape interpolation points, calculate the number of shape interpolation points in a corner, and determine whether or not a first dividing condition for performing a second corner dividing processing is met by whether the number of shape interpolation points is equal to or larger than a threshold, which is three in this embodiment. On the shape estimation road r10 of FIG. 21, the number of shape interpolation points m2 to m9 in the corner cn1 is eight, and thus the first dividing condition is met.

For example, as described above, since three or more shape interpolation points are not included in the corners in the shape estimation road r8 of FIG. 15 and the shape estimation road r9 of FIG. 16, the first dividing condition is not met.

Next, the dividing condition determination processing unit determines whether a segment length between predetermined shape interpolation points in the corner is relatively longer as compared to respective segment lengths between other shape interpolation points in the corner. For this purpose, the dividing condition determination processing unit reads the segment lengths between respective shape interpolation points in the corner, and determines whether a second dividing condition is met or not by whether segments between predetermined shape interpolation points in the corner have segment lengths equal to or larger than a threshold for a second dividing condition determination calculated based on the segment lengths between respective shape interpolation points in the corner, that is, a second dividing threshold Lthcn.

For this purpose, an average segment length calculation processing unit of the dividing condition determination processing unit performs average segment length calculation processing to calculate an average value La of the segment lengths between the respective shape interpolation points m2 to m9. Subsequently, the threshold calculation processing unit of the dividing condition determination processing unit performs threshold calculation processing to set the second dividing threshold Lthcn, when a standard deviation calculated based on the average value La is σ2, to be Lthcn = La + 3 · σ2 In FIG. 21, when the segment Lc1 between the shape interpolation points m5, m6 has a segment length equal to or larger than the second dividing threshold Lthcn, the second dividing condition is met. Note that the standard deviation σ2 is an added value set corresponding to the average value La.

Subsequently, when the first, second diving conditions are met, the division execution processing unit (segment length basis division execution processing unit) of the dividing condition determination processing unit performs division execution processing to divide the corner by a segment having a segment length equal to or larger than the second dividing threshold Lthcn. Further, the division execution processing unit takes the preceding shape interpolation point out of the shape interpolation points forming the segment having a segment length equal to or larger than the second dividing threshold Lthcn as a candidate end point, and takes the succeeding shape interpolation point out of the shape interpolation points forming the segment having a segment length equal to or larger than the second dividing threshold Lthcn as a candidate start point. In FIG. 22, the corner cn1 is divided by the segment between the shape interpolation points m5, m6 having a segment length Lc11 that is equal to or larger than the second dividing threshold Lthcn. A shape interpolation point m2 is taken as a candidate start point s1, the shape interpolation point m5 preceding the segment between the shape interpolation points m5, m6 is taken as a candidate end point e1, the shape interpolation point m6 succeeding the segment between the shape interpolation points m5, m6 is taken as a candidate start point s2, and a shape interpolation point m9 is taken as a candidate end point e2.

In this manner, in this embodiment, as shown in FIG. 23, a corner cn1 is formed by the shape interpolation points m2 to m5, and a corner cn2 is formed by the shape interpolation points m6 to m9.

Further, when one of the first, second dividing conditions is not met, the corner division execution processing unit does not divide the current corner.

Accordingly, in this embodiment, even if precision of the interpolation point data on the database is low and a shape interpolation point is not set in a straight section of a corner, dividing of the corner is performed when the first, second dividing conditions are met. Therefore, corners that should be regarded as a plurality of corners on the actual road will not be regarded as one corner on the database, and thus the road shape can be estimated precisely.

Further, the second dividing threshold Lthcn is calculated by adding the standard deviation σ2 to the average value La, and it is set larger as the average value La gets larger or set smaller as the average value La gets smaller. Thus, when noise is added to values of the respective segment lengths or the like, it is possible to precisely determine whether the second dividing condition is met or not.

Since the standard deviation σ2 represents the degree of dispersion of the respective segment lengths between the respective shape interpolation points m2 to m9 of the corner, easiness for dividing of the corner to be performed can be changed according to the degree of dispersion of the segment lengths. Specifically, when the degree of dispersion of the segment lengths is high, the second dividing threshold Lthcn becomes large, which makes it difficult for the second dividing condition to be met, and makes it difficult for the corner to be divided. On the other hand, when the degree of dispersion of the segment lengths is low, the second dividing threshold Lthcn becomes small, which makes it easy for the second dividing condition to be met, and makes it easy for the corner to be divided.

Therefore, dividing of the corner can be performed appropriately.

Note that in this embodiment, the second dividing threshold Lthcn is calculated by adding the standard deviation σ2 to the average value La, but a second dividing threshold Lthcn that is set in advance corresponding to the average value La can be recorded, for example, in the data recording unit 16.

In this case, a segment length threshold map as a second threshold map in which the average value La and the second dividing threshold Lthcn correspond to each other is recorded in the ROM 33. In the division execution processing, the division execution processing unit refers to the segment length threshold map to read the second dividing threshold Lthcn corresponding to the average value La, compares the segment lengths between the respective shape interpolation points m2 to m9 with the second dividing threshold Lthcn, and divides the corner by a segment having a segment length equal to or larger than the second dividing threshold Lthcn.

Next, the flowchart will be explained.

In step S5-1, a loop by the number of corners is started.

In step S5-2, corner information of the current corner is obtained.

In step S5-3, it is determined whether the number of shape interpolation points in the corner is three or more. When the number of shape interpolation points in the corner is three or more, the process proceeds to step S5-4. When the number of shape interpolation points in the corner is smaller than three, the process proceeds to step S5-7.

In step S5-4, the average value La of segment lengths in the corner is calculated.

In step S5-5, the second dividing threshold Lthcn is calculated from the average value La.

In step S5-6, the corner is divided by a segment having a segment length equal to or larger than the second dividing threshold Lthcn.

In step S5-7, the loop by the number of corners is finished, and the process is finished.

Next, the clothoid coefficient estimation processing in step S7 of FIG. 2 will be explained.

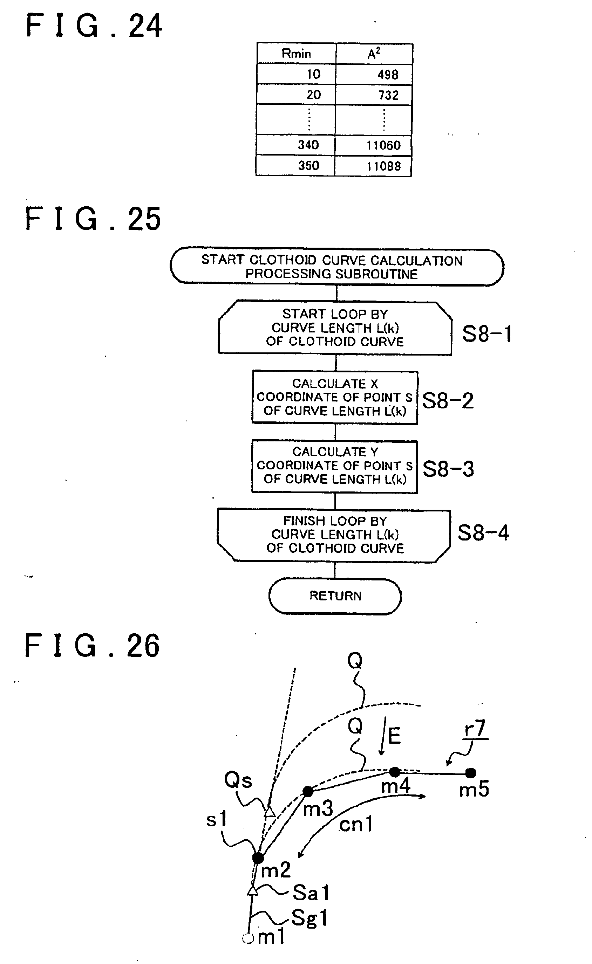

FIG. 24 is a table showing a clothoid coefficient map in the embodiment of the present invention.

In this case, minimum radii Rmin and square values $A^2$ of the clothoid coefficient A of a clothoid curve are recorded corresponding to each other as a clothoid coefficient map in the ROM 33 (FIG. 1), and the clothoid coefficient estimation processing unit reads the minimum radius Rmin calculated in aforementioned step S6, refers to the clothoid coefficient map, and reads the value $A^2$ corresponding to the minimum radius Rmin. Subsequently, the clothoid coefficient estimation processing unit calculates and estimates a clothoid coefficient A. Note that the clothoid coefficient map is created based on a relationship between a radius on the actual road and the clothoid coefficient of a clothoid curve that is used when designing this road.

Next, the subroutine of the clothoid curve calculation processing in step S8 of FIG. 2 will be explained.

FIG. 25 is a flowchart showing the subroutine of the clothoid curve calculation processing in the embodiment of the present invention.

Now, the clothoid curve is a curve having a radius of curvature that becomes smaller with distance from its origin. Generally, when a road is designed, a part of the clothoid curve is assigned to the start point or end point of a corner. To express the clothoid curve by x-y coordinates, when the distance from the start point (origin) of the clothoid curve to a predetermined point S, namely, a curve length is L, and a curve radius at the point S is Rc, following equation holds true.

$L \cdot Rc = A^2$ ... (7) Further, normally, the X coordinate and Y coordinate of the clothoid curve can be calculated by polynomials shown by equations (8) and (9), respectively.

$X = L \times (1 - L^2/(40Rc^2) + L^4/(3456Rc^4) - L^6/(599040Rc^6) + L^8/(175472640Rc^8) ...)$ ... (8) $X = L^2/(6Rc) \times (1 - L^2/(56Rc^2) + L^41(7040Rc^4) - L^6/(1612800Rc^6) + L^8/(588349440Rc^8) ...)$ ...(9) In this case, it is conceivable to calculate the clothoid curve by aforementioned equations (8) and (9), but since equations (8) and (9) are high-order polynomials, load applied to the CPU 31 becomes large by clothoid curve calculation processing when it is attempted to calculate the clothoid curve by plotting a large number of points.

Accordingly, in this embodiment, the clothoid curve is calculated based on the clothoid coefficient A calculated in the clothoid coefficient estimation processing by the clothoid curve calculation processing unit. Thus, the clothoid curve calculation processing unit approximates and calculates the X coordinate and the Y coordinate of the clothoid curve (point S of the curve length L (k)) by equations (10) and (11) obtained based on simulation.

[Equation 1]

$$X = X_0 + \sum_r \cos \phi \qquad \cdots\cdots (10)$$

$$Y = Y_0 + \sum_L \sin \phi \qquad \cdots\cdots (11)$$

Here, $X_0$ and $Y_0$ are X coordinate and Y coordinate of a start point of the clothoid curve. Further, angle $\phi$ is expressed by equation (12).

$\phi = \alpha + 2k \cdot L$ ... (12) Here, $\alpha$ is the direction of the start point of the clothoid curve, and value k is expressed by the following equation (13).

$k = 28/A^2$...(13) Next, the flowchart will be explained.

In step S8-1, a loop is started by the curve length L(k) of the clothoid curve.

In step S8-2, the X coordinate of the point S of the curve length L(k) is calculated.

In step S8-3, the Y coordinate of the point S of the curve length L(k) is calculated.

In step S8-4, the loop is finished by the curve length L(k) of the clothoid curve, and the process returns to the main routine.

Next, the fitting processing in step S9 of FIG. 2 will be explained.

FIG. 26 is an explanatory diagram of the fitting processing in the embodiment of the present invention.

In the diagram, reference numeral r7 denotes a shape estimation road, reference numeral cn1 denotes a corner set by the corner connection processing and the first, second corner dividing processing, reference numerals m1 to m5 denote shape interpolation points forming the corner cn1, and reference numeral s1 denotes a candidate start point of the corner cn1.

In this case, a clothoid curve movement processing unit of the fitting processing unit performs clothoid curve movement processing to place the origin Qs of a clothoid curve Q on an extended line of the segment Sg1 connecting the shape interpolation points m1, m2, and move the clothoid curve Q in an arrow E direction so that a tangent line on the origin Qs and the extended line of the segment Sg1 correspond.

At this time, an error calculation processing unit of the fitting processing unit performs error calculation processing to calculate the sum of errors of the position of the clothoid curve Q with respect to the respective shape interpolation points m2 to m5 after the shape interpolation point m2. In this case, the errors of the position of the clothoid curve Q with respect to the respective shape interpolation points m2 to m5 are calculated based on a distance on the X-axis and a distance on the Y-axis between the shape interpolation points m2 to m5 and each point plotted when drawing the clothoid curve Q.

Then the clothoid curve movement processing unit matches the clothoid curve Q with the shape interpolation points m2 to m5 so that the sum of the errors becomes smallest, so as to set the position of the clothoid curve Q.

Subsequently, a start point/end point extraction processing unit of the fitting processing unit performs start point/end point extraction processing, and set the origin Qs of the clothoid curve Q as a start point Sal of the actual corner when the position of the clothoid curve Q is set.

Then the clothoid curve movement processing unit, the error calculation processing unit and the start point/end point extraction processing unit perform similar processing on the end point side of the corner cn1 so as to set the position of the clothoid curve Q, and then set the origin of the clothoid curve Q as an end point of the actual corner.

In this manner, the candidate start point and the candidate end point are corrected with the clothoid curve Q, and the collected candidate start point and candidate end point can be set as the start point and end point of the actual corner, respectively. Thus, the candidate start point and the candidate end point of the corner cn1 can be made close to the start point and the end point of a corner on the actual road.

Next, the start point/end point recording processing in step S10 of FIG. 2 will be explained.

The start point/end point recording processing unit records positions of extracted candidate start point and candidate end point as data representing the road shape in the data recording unit 16.

Thus, in this embodiment, a road shape can be estimated precisely, and the start point and the end point of an actual corner are set based on the precisely estimated road shape. Therefore, it is possible to precisely control traveling of the vehicle by changing the shift speed of the automatic transmission 10 corresponding to the road shape or changing the output of the engine 52 corresponding to the road shape.

In this embodiment, estimation of a road shape is performed by operation of the CPU 31 of the navigation device 14, but it is possible to estimate a road shape by operation of a CPU (not shown) of the automatic transmission control device 11 or by operation of a CPU as a control device of the information center. Note that a vehicle control device is disposed as a control device at a higher level than the automatic transmission control device 11 and the engine control device 51 so as to perform overall control of the entire vehicle, and it is also possible to estimate a road shape by operation of a CPU of this vehicle control device.

Further, in this embodiment, estimation of road shape is performed for a shape estimation road between adjacent nodes, but when a road shape is estimated for every shape estimation road between respective nodes in the case where there is a node in a corner on the actual road, the processing becomes different before and after the node in the corner. Accordingly, in another embodiment, road following data are added between respective road links in road data, and when a road link that is expected to be entered after passing the node is clear, or when a searched route is set by route search processing, estimation of road shape can be performed for two or more consecutive shape estimation roads.

It should be noted that the present invention is not limited to the above-described embodiment, and can be modified in various ways. Such modifications are not excluded from the scope of the present invention.

**Claims**

1. A road shape estimating device, comprising:

   a data obtaining processing unit (31) that is adapted to obtain interpolation point data of a plurality of shape interpolation points (mi) which are set along a road (r1-r10) and represent a shape of the road;
   a radius calculation processing unit (31) that is adapted to calculate a radius (R) of curvature at each of shape interpolation points (mi) based on the interpolation point data in a predetermined section of the road; and
   a corner detection processing unit (31) that is adapted to detect a corner (cn1) in the predetermined section based on the radius (R) of curvature at each of the shape interpolation points (mi);
   **characterized in that** it further comprises
   a corner dividing processing unit (31) that is adapted to set a radii threshold corresponding to an average value of radii of curvature at respective shape interpolation points (mi) in the detected corner (cn1) and is adapted to perform dividing of the corner (cn1) at a shape interpolation point (m6) having a radius (R) of curvature equal to or larger than the radii threshold in the detected comer; wherein

the road shape is separately estimated for each of the divided corners.

2. The road shape estimating device according to claim 1, wherein:

the corner dividing processing unit (31) is further adapted to obtain segment lengths (Lc11) of segments between respective shape interpolation points (m5, m6) in the detected corner (cn1) and is adapted to perform dividing of the corner (cn1) by a segment having a segment length (Lc11) equal to or larger than a segment length threshold which is set corresponding to an average value of the respective segment lengths (Lc11).

3. The road shape estimating device according to claim 1 or 2, wherein
the radii threshold is set corresponding to a degree of dispersion of radii (R) of curvature at respective shape interpolation points (mi) in the corner (cn1).

4. The road shape estimating device according to claim 2, wherein
the segment length threshold is set corresponding to a degree of dispersion of the segment lengths (Lc11).

5. A road shape estimating method, comprising the steps of:

obtaining interpolation point data of a plurality of shape interpolation points (mi) which are set along a road (r1-r10) and represent a shape of the road (r1-r10);
calculating a radius (R) of curvature at each of shape interpolation points (mi) based on the interpolation point data in a predetermined section of the road (r1-r10); and
detecting a corner (cn1) in the predetermined section based on the radius (R) of curvature at each of the shape interpolation points (mi);
**characterized by** the further steps of
setting a radii threshold corresponding to an average value of radii (R) of curvature at respective shape interpolation points (mi) in the detected corner (cn1); and
performing dividing of the corner (cn1) at a shape interpolation point (m6) having a radius (R) of curvature equal to or larger than the radii threshold in the detected corner (cn1),
wherein
the road shape is separately estimated for each of the divided corners.

6. The road shape estimating method, according to claim 5, further comprising the steps of:

obtaining segment lengths (Lc11) of segments between respective shape interpolation points (m5, m6) in the detected corner (cn1); and
performing dividing of the corner (cn1) by a segment having a segment length (Lc11) equal to or larger than a segment length threshold which is set corresponding to an average value of the respective segment lengths (Lc11).

7. The road shape estimating method according to claim 5 or 6, further comprising the steps of:

setting the radii threshold corresponding to a degree of dispersion of radii (R) of curvature at respective shape interpolation points (mi) in the corner (cn1).

8. The road shape estimating method according to claim 6, further comprising the steps of:

setting the segment length threshold corresponding to a degree of dispersion of the segment lengths (Lc11).

9. A program comprising program code which, when run in a computer causes the computer to perform the steps of a method of one of claims 5 to 8.

**Patentansprüche**

1. Straßenformabschätzvorrichtung, mit:

einer Datengewinnungsverarbeitungseinheit (31), die dazu angepasst ist, Interpolationspunktdaten einer Mehrzahl von Forminterpolationspunkten (mi), die entlang einer Straße (r1-r10) festgelegt sind und eine Form der Straße wiedergeben, zu gewinnen;

einer Radiusberechnungsverarbeitungseinheit (31), die dazu angepasst ist, einen Radius (R) einer Krümmung an jedem der Forminterpolationspunkte (mi) basierend auf den Interpolationspunktdaten in einem vorbestimmten Abschnitt der Straße zu berechnen; und

einer Eckendetektionsverarbeitungseinheit (31), die dazu angepasst ist, eine Ecke (cn1) in dem vorbestimmten Abschnitt basierend auf dem Radius (R) einer Krümmung an jedem der Forminterpolationspunkte (mi) zu detektieren;

**dadurch gekennzeichnet, dass** sie weiter aufweist:

eine Eckenaufteilungsverarbeitungseinheit (31), die dazu angepasst ist, einen Radiengrenzwert entsprechend einem Durchschnittswert von Radien einer Krümmung an jeweiligen Forminterpolationspunkten (mi) in der detektierten Ecke (cn1) festzulegen, und dazu angepasst ist, ein Aufteilen der Ecke (cn1) an einem Forminterpolationspunkt (m6), der einen Radius (R) einer Krümmung gleich zu oder größer als der Radiengrenzwert in der detektierten Ecke aufweist, auszuführen; wobei die Straßenform separat für jede der aufgeteilten Ecken abgeschätzt wird.

2. Straßenformabschätzvorrichtung nach Anspruch 1, bei der:

die Eckenaufteilungsverarbeitungseinheit (31) weiter dazu angepasst ist, Segmentlängen (Lc11) von Segmenten zwischen jeweiligen Forminterpolationspunkten (m5, m6) in der detektierten Ecke (cn1) zu gewinnen, und dazu angepasst ist, ein Aufteilen der Ecke (cn1) durch ein Segment, das eine Segmentlänge (Lc11) gleich zu oder größer als ein Segmentlängengrenzwert, der entsprechend einem Durchschnittswert der jeweiligen Segmentlängen (Lc11) festgelegt ist, auszuführen.

3. Straßenformabschätzvorrichtung nach Anspruch 1 oder 2, bei der der Radiengrenzwert entsprechend einem Streuungsgrad von Radien (R) einer Krümmung an entsprechenden Forminterpolationspunkten (mi) in der Ecke (cn1) festgelegt wird.

4. Straßenformabschätzvorrichtung nach Anspruch 1, bei der der Segmentlängengrenzwert entsprechend einem Streuungsgrad der Segmentlängen (Lc 11) festgelegt wird.

5. Straßenformabschätzverfahren mit den folgenden Schritten:

Gewinnen von Interpolationspunktdaten einer Mehrzahl von Forminterpolationspunkten (mi), die entlang einer Straße (r1-r10) festgelegt sind und eine Form der Stra0e (r1-r10) wiedergeben;

Berechnen eines Radius (R) einer Krümmung an jedem der Forminterpolationspunkte (mi) basierend auf den Interpolationspunktdaten in einem vorbestimmten Abschnitt der Straße (r1-r10); und

Detektieren einer Ecke (cn1) in dem vorbestimmten Abschnitt basierend auf dem Radius (R) einer Krümmung an jedem der Forminterpolationspunkte (mi);

**gekennzeichnet durch** die weiteren Schritte:

Festlegen eines Radiengrenzwertes entsprechend einem Durchschnittswert von Radien (R) einer Krümmung an entsprechenden Forminterpolationspunkten (mi) in der detektierten Ecke (cn1); und

Ausführen eines Aufteilens der Ecke (cn1) an einem Forminterpolationspunkt (m6), der einen Radius (R) einer Krümmung gleich zu oder größer als der Radiengrenzwert in der detektierten Ecke (cn1) aufweist, wobei die Straßenform getrennt für jede der unterteilten Ecken abgeschätzt wird.

6. Straßenformabschätzverfahren nach Anspruch 5, weiter aufweisend die Schritte:

Gewinnen von Segmentlängen (Lc11) von Segmenten zwischen jeweiligen Forminterpolationspunkten (m5, m6) in der detektierten Ecke (cn1); und

Ausführen eines Aufteilens der Ecke (cn1) durch ein Segment, das eine Segmentlänge (Lc11) gleich zu oder größer als ein Segmentlängengrenzwert, der entsprechend einem Durchschnittswert von entsprechenden Segmentlängen (Lc11) festgelegt ist, aufweist.

7. Straßenformabschätzverfahren nach Anspruch 5 oder 6, weiter aufweisend die Schritte
Festlegen des Radiengrenzwertes entsprechend einem Streuungsgrad von Radien (R) einer Krümmung an entsprechenden Forminterpolationspunkten (mi) in der Ecke (cn1).

8. Straßenformabschätzverfahren nach Anspruch 6, weiter aufweisend die Schritte
Festlegen des Segmentlängengrenzwertes entsprechend einem Streuungsgrad der Segmentlängen (Lc11).

9. Programm mit Programmcode, der, wenn er auf einem Computer ausgeführt wird, bewirkt, dass der Computer die Schritte eines Verfahrens nach einem der Ansprüche 5 bis 8 ausführt.

**Revendications**

1. Dispositif d'estimation de forme de route, comprenant :

une unité de traitement d'obtention de données (31) qui est adaptée pour obtenir des données de point d'interpolation d'une pluralité de points d'interpolation de forme (mi) qui sont établis le long d'une route (r1-r10) et représentent une forme de la route ;
une unité de traitement de calcul de rayon (31) qui est adaptée pour calculer un rayon (R) de courbure en chacun des points d'interpolation de forme (mi) en fonction des données de point d'interpolation dans une section prédéterminée de la route ; et
une unité de traitement de détection de tournant (31) qui est adaptée pour détecter un tournant (cn1) dans la section prédéterminée en fonction du rayon (R) de courbure en chacun des points d'interpolation de forme (mi) ;
**caractérisé en ce qu'**il comprend en outre :

une unité de traitement de division de tournant (31) qui est adaptée pour régler un seuil de rayon correspondant à une valeur moyenne des rayons de courbure en des points d'interpolation de forme (mi) respectifs dans le tournant (cn1) détecté et est adaptée pour réaliser la division du tournant (cn1) en un point d'interpolation de forme (m6) ayant un rayon (R) de courbure supérieur ou égal au seuil de rayon dans le tournant détecté ; dans lequel
la forme de la route est estimée séparément pour chacun des tournants divisés.

2. Dispositif d'estimation de forme de route selon la revendication 1, dans lequel :

l'unité de traitement de division de tournant (31) est en outre adaptée pour obtenir des longueurs de segment (Lc11) de segments entre des points d'interpolation de forme respectifs (m5, m6) dans le tournant (cn1) détecté et est adaptée pour réaliser une division du tournant (cn1) par un segment ayant une longueur de segment (Lc11) supérieure ou égale à un seuil de longueur de segment qui est réglé en fonction d'une valeur moyenne des longueurs de segment (Lc11) respectives.

3. Dispositif d'estimation de forme de route selon la revendication 1 ou 2, dans lequel
le seuil de rayon est réglé en fonction d'un degré de dispersion de rayons (R) de courbure en des points d'interpolation de forme (mi) respectifs dans le tournant (cn1).

4. Dispositif d'estimation de forme de route selon la revendication 2, dans lequel
le seuil de longueur de segment est réglé en fonction d'un degré de dispersion des longueurs de segment (Lc11).

5. Procédé d'estimation de forme de route, comprenant les étapes consistant à :

obtenir des données de point d'interpolation d'une pluralité de points d'interpolation de forme (mi) qui sont établis le long d'une route (r1-r10) et représentent une forme de la route (r1-r10) ;
calculer un rayon (R) de courbure en chacun des points d'interpolation de forme (mi) en fonction des données de point d'interpolation dans une section prédéterminée de la route (r1-r10) ; et
détecter un tournant (cn1) dans la section prédéterminée en fonction du rayon (R) de courbure en chacun des points d'interpolation de forme (mi) ;
**caractérisé par** les autres étapes consistant à
régler un seuil de rayon correspondant à une valeur moyenne des rayons (R) de courbure en des points d'interpolation de forme (mi) respectifs dans le tournant (cn1) détecté ; et
réaliser la division du tournant (cn1) en un point d'interpolation de forme (m6) ayant un rayon (R) de courbure supérieur ou égal au seuil de rayon dans le tournant (cn1) détecté,

dans lequel
la forme de la route est estimée séparément pour chacun des tournants divisés.

6. Procédé d'estimation de forme de route, selon la revendication 5, comprenant en outre les étapes consistant à :

   obtenir des longueurs de segment (Lc11) de segments entre des points d'interpolation de forme respectifs (m5, m6) dans le tournant (cn1) détecté ; et
   réaliser une division du tournant (cn1) par un segment ayant une longueur de segment (Lc11) supérieure ou égale à un seuil de longueur de segment qui est réglé en fonction d'une valeur moyenne des longueurs de segment (Lc11) respectives.

7. Procédé d'estimation de forme de route, selon la revendication 5 ou 6, comprenant en outre les étapes consistant à :

   régler le seuil de rayon en fonction d'un degré de dispersion de rayon (R) de courbure en des points d'interpolation de forme (mi) respectifs dans le tournant (cn1).

8. Procédé d'estimation de forme de route, selon la revendication 6, comprenant en outre les étapes consistant à régler le seuil de longueur de segment en fonction d'un degré de dispersion des longueurs de segment (Lc11).

9. Programme comprenant un code de programme qui, quand il tourne dans un ordinateur fait que l'ordinateur réalise les étapes d'un procédé selon l'une des revendications 5 à 8.

# FIG. 1

**14** NAVIGATION DEVICE

**44** VEHICLE SPEED SENSOR

**16** DATA RECORDING UNIT

**15** GPS SENSOR

**17** NAVIGATION PROCESSING UNIT

- **31** CPU
- **32** RAM
- **33** ROM

**34** OPERATION UNIT

**35** DISPLAY UNIT

**36** AUDIO INPUT UNIT

**37** AUDIO OUTPUT UNIT

**38** COMMUNICATION UNIT

**10** AUTOMATIC TRANSMISSION

**11** AUTOMATIC TRANSMISSION CONTROL DEVICE

**51** ENGINE CONTROL DEVICE

**52** ENGINE

# F I G . 2

```
        ( START )
           │
┌──────────────────────┐
│ RADIUS CALCULATION   │  S1
│ PROCESSING           │
└──────────────────────┘
           │
┌──────────────────────┐
│ CORNER DETECTION     │  S2
│ PROCESSING           │
└──────────────────────┘
           │
┌──────────────────────┐
│ CORNER CONNECTION    │  S3
│ PROCESSING           │
└──────────────────────┘
           │
┌──────────────────────┐
│ FIRST CORNER DIVIDING│  S4
│ PROCESSING           │
└──────────────────────┘
           │
┌──────────────────────┐
│ SECOND CORNER DIVIDING│ S5
│ PROCESSING           │
└──────────────────────┘
           │
┌──────────────────────┐
│ MINIMUM RADIUS       │  S6
│ CALCULATION PROCESSING│
└──────────────────────┘
           │
┌──────────────────────┐
│ CLOTHOID COEFFICIENT │  S7
│ ESTIMATION PROCESSING│
└──────────────────────┘
           │
┌──────────────────────┐
│ CLOTHOID CURVE CALCULATION│ S8
│ PROCESSING           │
└──────────────────────┘
           │
┌──────────────────────┐
│ FITTING PROCESSING   │  S9
└──────────────────────┘
           │
┌──────────────────────┐
│ START POINT/END POINT│  S10
│ RECORDING PROCESSING │
└──────────────────────┘
           │
        ( END )
```

# F I G . 3

```
( START RADIUS CALCULATION    )
( PROCESSING SUBROUTINE        )
           │
┌──────────────────────┐
│ CALCULATE SEGMENT    │
│ LENGTH OF FRONT      │  S1-1
│ SIDE SEGMENT         │
└──────────────────────┘
           │
┌──────────────────────┐
│ CALCULATE SEGMENT    │
│ LENGTH OF REAR       │  S1-2
│ SIDE SEGMENT         │
└──────────────────────┘
           │
┌──────────────────────┐
│ CALCULATE DIRECTION  │  S1-3
│ ANGLE                │
└──────────────────────┘
           │
┌──────────────────────┐
│ CALCULATE RADIUS     │  S1-4
└──────────────────────┘
           │
        ( RETURN )
```

## F I G . 4

$$G = X + A$$
$$Q$$
$$H = F - Y$$
$$R$$
$$F = \sqrt{R^2 - A^2}$$
$$Y = L1\sin\theta$$
$$\theta$$
$$X = L1\cos\theta$$
$$A = L2/2$$

mb
ma
mc
Cr
L1
L2

## F I G . 5

G
r1
m6
m5
m7
m4
m8
m3
m9
s1
m2
e1
m10
m1
m11

## F I G . 6

r1
m4
m3
s1
m2
m1

21

# F I G . 7

$r2$

m14  $\theta$ 14

s1

m13  $\theta$ 13

m15

m11  m12

$\theta$ 12

m16  $\theta$ 15

# F I G . 8

m8  $\underline{r1}$

m9

e1  m10

m11

# F I G . 9

$\theta$ 22

m23  $\theta$ 23  $\underline{r3}$

m22

m21  e1

m24  m25  m26

$\theta$ 24  $\theta$ 25

# F I G . 10

m5  m6  m7  $\underline{r4}$

m4

cn1

m3

m8

m2

m9

s1

e1

m1

m10

# FIG.11

r5

f1

m33

m32    cn1    m34

m31                m35

# FIG.12

r6

m44

$\theta$ 43    $\theta$ 44    f1    m46

$\theta$ 42                $\theta$ 46

m43    cn1    m47

m42    m45    $\theta$ 45

m41    m48    $\theta$ 47

# FIG.13

r7

cn1

m5    m6    m7

m4    m8

m3    m9

m2    m10

m1    s1    e1    m11

# FIG. 14

```
       ┌─────────────────────────┐
       │      START FIRST         │
       │   CORNER DIVIDING        │
       │ PROCESSING SUBROUTINE    │
       └────────────┬─────────────┘
                    │
    ┌───────────────────────────────┐
    │        START LOOP BY          │   S4-1
    │      NUMBER OF CORNERS        │
    └───────────────┬───────────────┘
                    │
       ┌─────────────────────────┐
       │     OBTAIN CORNER        │   S4-2
       │   INFORMATION OF         │
       │   CURRENT CORNER         │
       └────────────┬─────────────┘
                    │              S4-3
              ╱─────────────╲
            ╱   IS NUMBER     ╲
          ╱  OF SHAPE INTERPOLATION ╲      N
         ⟨ POINTS IN CORNER THREE    ⟩──────┐
          ╲      OR MORE?     ╱             │
            ╲               ╱               │
              ╲──────┬──────╱               │
                     │ Y                    │
       ┌─────────────────────────┐          │
       │ CALCULATE AVERAGE VALUE  │          │
       │   OF RADII OF SHAPE      │   S4-4   │
       │ INTERPOLATION POINTS     │          │
       │      IN CORNER           │          │
       └────────────┬─────────────┘          │
                    │                        │
         ┌────────────────────┐              │
         │ CALCULATE FIRST     │             │
         │ DIVIDING THRESHOLD  │   S4-5      │
         │ FROM AVERAGE        │             │
         │     VALUE           │             │
         └──────────┬──────────┘             │
                    │                        │
       ┌─────────────────────────┐          │
       │   DIVIDE CORNER AT SHAPE │          │
       │  INTERPOLATION POINT     │          │
       │ HAVING RADIUS EQUAL TO   │   S4-6   │
       │ OR LARGER THAN FIRST     │          │
       │   DIVIDING THRESHOLD     │          │
       └────────────┬─────────────┘          │
                    │◄───────────────────────┘
                    │
    ┌───────────────────────────────┐
    │        FINISH LOOP BY         │   S4-7
    │      NUMBER OF CORNERS        │
    └───────────────┬───────────────┘
                    │
            ┌───────────────┐
            │    RETURN      │
            └───────────────┘
```

# FIG. 15

F I G . 16

F I G . 17

F I G . 18

# FIG.19

# FIG.20

START SECOND CORNER DIVIDING PROCESSING SUBROUTINE

START LOOP BY NUMBER OF CORNERS — S5-1

OBTAIN CORNER INFORMATION OF CURRENT CORNER — S5-2

S5-3
IS NUMBER OF SHAPE INTERPOLATION POINTS IN CORNER THREE OR MORE? — N

Y

CALCULATE AVERAGE VALUE OF SEGMENT LENGTHS IN CORNER — S5-4

CALCULATE SECOND DIVIDING THRESHOLD FROM AVERAGE VALUE — S5-5

DIVIDE CORNER BY SEGMENT HAVING SEGMENT LENGTH EQUAL TO OR LARGER THAN SECOND DIVIDING THRESHOLD — S5-6

FINISH LOOP BY NUMBER OF CORNERS — S5-7

RETURN

F I G . 21

r10

cn1

m5    m6

m4    m7

Lc11

m3    m8

m2    m9

m1    s1    e1    m10

F I G . 22

r10

m5    m6

m4    m7

m3    e1    Lc11    s2    m8

m2    m9

m1    s1    e2    m10

F I G . 23

r10

cn1    m5    m6    cn2

m4    e1    s2 m7

m3    m8

m2    m9

m1    s1    e2    m10

# F I G . 24

| Rmin | $A^2$ |
|---|---|
| 10 | 498 |
| 20 | 732 |
| ⋮ | ⋮ |
| 340 | 11060 |
| 350 | 11088 |

# F I G . 25

```
START CLOTHOID CURVE CALCULATION
PROCESSING SUBROUTINE
```

START LOOP BY
CURVE LENGTH L(k)
OF CLOTHOID CURVE — S8-1

CALCULATE X
COORDINATE OF POINT S — S8-2
OF CURVE LENGTH L(k)

CALCULATE Y
COORDINATE OF POINT S — S8-3
OF CURVE LENGTH L(k)

FINISH LOOP BY
CURVE LENGTH L(k) — S8-4
OF CLOTHOID CURVE

RETURN

# F I G . 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214839 A

- EP 1559994 A2